Europäisches Patentamt

**European Patent Office**

Office européen des brevets

(19)

(11) Publication number: **0 077 614**
A2

# (12) EUROPEAN PATENT APPLICATION

(21) Application number: **82305184.2**

(22) Date of filing: **30.09.82**

(51) Int. Cl.³: **H 01 M 6/04**
**H 01 M 4/36**

(30) Priority: **15.10.81 US 311537**

(43) Date of publication of application:
**27.04.83 Bulletin 83/17**

(84) Designated Contracting States:
**CH DE GB LI**

(71) Applicant: **Ray-O-Vac Corporation**
**101 East Washington Avenue**
**Madison WI 53703(US)**

(72) Inventor: **Megahed, El-Sayed A.**
**1413 Mound Street**
**Madison Wisconsin 53711(US)**

(74) Representative: **Greenstreet, Cyril Henry et al,**
**Thames House (Fifth floor) Millbank**
**London SW1P 4QF(GB)**

(54) Alkaline electrochemical cells.

(57) In an alkaline electrochemical cell, particularly a button cell, having a cathode that includes a reducible oxide, e.g. divalent silver oxide or β-manganese dioxide, an alkaline metal borohydride, a quaternary ammonium borohydride, a complex aluminium hydride or hydrazine is dissolved in or made available to the electrolyte on cell closure to reduce the oxide and avoid discharge at two voltage plateaus.

EP 0 077 614 A2

Croydon Printing Company Ltd.

Alkaline electrochemical cells

This invention relates to electrochemical cells having alkaline electrolytes, and more particularly to alkaline button cells having cathodes that consist of or contain high potential oxide, that is to say oxides that discharge in the cell at a high voltage.

The open circuit voltage (OCV) of an alkaline electrochemical cell having an anode of an active metal, for example zinc, an alkaline electrolyte, an appropriate separator and a cathode, will be determined by the nature of the anode and the cathode. To increase the energy content of the cell, which is particularly desirable in button cells where only a small volume is available, the cathode is formed wholly or partly of high potential oxide, generally a higher oxide of a metal that can exist in two or more oxidation salts. The cathode may for example consist wholly of divalent silver oxide AgO, or alternatively monovalent silver oxide $Ag_2O$ may be extended with AgO, mercuric oxide HgO and/or a permanganate compound, e.g. $KMnO_4$, $LiMnO_4$ or $BaMnO_4$.

Such cathodes, particularly AgO or $AgO/Ag_2O$, have the disadvantage that they show an OCV and impedance typical of the high potential oxide and will discharge at two distinct levels (plateaus), one characteristic e.g. of the $Zn/AgO$ couple and the other characteristic of the $Zn/Ag_2O$ couple. The high OCV and impedance values and the two-plateau type of discharge are undesirable in that the cell will either be unsuitable for powering a microelectronic circuit at one or the other voltage, or the powered device will require a more complex microelectronic circuit to tolerate the high OCV-impedance values and the two voltage operation.

Many efforts have been made to overcome this disadvantage and to provide cells with low impedance and single voltage plateau discharge, together with high energy capacity. Thus in the case of alkaline silver.oxide cells many patents propose methods aimed at achieving a single plateau discharge characteristic of the $Zn/Ag_2O$ couple while employing AgO in the cathode. For example, Dension U.S. Patent No. 2,681,376 discloses the use of potassium ethylate in an electrolyte in a Zn/AgO cell; Solomon U.S. Patent No. 3,055,964, Soto-Krebs U.S. Patent No. 3,615,858, Megahed et al U.S. Patents Nos. 4,009,056 and 4,016,056, Megahed U.S. Patent No. 4,048,405 and Naruishi et al U.S. Patent No. 4,068,049 all disclose partial pre-reduction of an AgO cathode pellet prior to cell assembly; Balters U.S. Patent No. 4,209,578 discloses the use of chemical reducing agents in a cell to form a silver layer on a positive electrode which contains . $Ag_2O$ as a potential determining component; and Langan U.S. Patent No. 4,250,234 suggests incorporation of methanol, ethanol or the like as a mild reducing agent in an AgO cell catholyte or electrolyte for the purpose of reducing a portion of the AgO.

None of these proposals is entirely satisfactory. In some instances, the manufacturing techniques are difficult to control, and in others there is a danger of the cell voltage rising from the $Zn/Ag_2O$ couple level to the Zn/AgO couple level after a short period of storage at room temperature.

The present invention is based on the discovery that the undesirable high voltage discharge and/or impedance exhibited by electrochemical cells comprising an active metal anode, an aqueous alkaline electrolyte, a suitable separator and a cathode containing at least one reducible oxidic species dischargeable over the useful life of the cathode at both a high voltage and a lower voltage is eliminated by incorporating in the cell an effective amount of one or more specific strong reducing agents that are soluble in the electrolyte, in such a way that they are available to the electrolyte at the time of closure of the cell. According to the invention, these reducing agents are alkali metal or quaternary ammonium borohydrides, complex aluminium hydrides and hydrazine.

While it is most convenient to include the reducing agent in the electrolyte when the cell is closed, it can if desired also or alternatively be associated with the anode or separator.

Strong reducing agents that can be used include but are not limited to borohydrides of lithium, sodium, potassium, caesium and rubidium, lithium aluminium hydride, sodium aluminium hydride, tetra-methylammonium borohydride, tetraethylammonium boro-hydride and hydrazine. The type of strong reducing agent used depends upon the nature of the cell. If the cell is sealed, a non-gassing reducing agent such as a borohydride is used. If the cell is vented, a gassing reducing agent, i.e. one that produces a gas as a product of oxidation thereof, such as hydrazine, can be used, though of course a non-gassing reducing agent can also be used in vented cells.

The amount of reducing agent should be sufficient to reduce from 0.1% to 10% by weight of the oxidic species having the undesirable high OCV and/or high impedance when coupled with the active metal anode to the corresponding metal or lower oxide. Generally speaking this will require from 0.5 to 12% by weight of the electrolyte of sodium borohydride or a chemically equivalent amount of other strong reducing agent.

After cell closure, the reducing agent in or available to the electrolyte uniformly penetrates the barrier system of the cell along with the electrolyte and then gradually and uniformly reduces the surface of the cathode material while the cell is in storage prior to use. This gradual and uniform reduction generally produces cells with uniform voltages which are characteristic of the active metal/low potential oxide couple while retaining the energy content of at least about 90% by weight of the higher potential oxide. Also, the discharge performance of the cells will be typical of the low potential oxide.

Oxide systems which can be used as initally placed cathodes in cells in accordance with the present invention include AgO; $Ag_2O$-AgO blends containing at least 5% and up to 98.5% by weight of AgO; $MnO_2$-HgO blends containing at least 10% and up to 95% by weight $MnO_2$ as the reducible oxide species and permanganate [$KMnO_4$, $AgMnO_4$, $Ca(MnO_4)_2$, $Ba(MnO_4)_2$, $LiMnO_4$] - $Ag_2O$ blends containing at least 5% and up to 95% by weight $Ag_2O$.

Cells of the present invention, particularly cells made with zinc as the active metal anode and AgO or $Ag_2O$-AgO blends as the initially placed cathode which contain reducing agents in the electrolyte, are characterised by relatively low impedance and relatively high flash current.

Some examples will now be given.

### Example 1

Several batches, each of 40 cells, of sealed, button-type cells of RW 44 size, were made having zinc anodes, an aqueous electrolyte containing, by weight, 40% KOH and 1% ZnO, and cathodes formed by consolidating pellets of essentially pure AgO by compaction at a pressure of 35 kg/mm$^2$. Different batches of the cells were made using cathodes with or without various treatments before or after consolidation and electrolytes with and without the additions of sodium borohydride.

The average electrical characteristics of each batch of cells, including impedance, open circuit voltage (OCV), closed circuit voltage through a 30 ohm load (CCV) and flash current (through a dead short) in amperes as measured three days after cell closure are set forth in Table I. Batches Nos. 1-6 were in accordance with the invention, while batches A-D were not.

The results in Table I shows that inclusion of sodium borohydride in the cell electrolyte added to the cell prior to closure can replace the more tedious and expensive pretreatment of the AgO cathode consolidations and still achieve low cell impedance, OCV characteristics of the $Zn/Ag_2O$ couple, high CCV and high flash current. Table also shows that addition of at least about 0.25% $NaBH_4$ to the cell electrolyte significantly lowers cell impedance and OCV and raises the flash current even when an AgO cathode pellet has been pretreated with a mild reducing agent.

TABLE I

| Batch | Electrolyte additive | Pellet* Pretreatment | Consolidation** Pretreatment | Impedance (ohms) | OCV (V) | CCV (V) | Flash Current (Amperes) |
|---|---|---|---|---|---|---|---|
| A | none | Yes | No | 27.8 | 1.75 | 1.02 | 0.46 |
| 1 | 0.25% $NaBH_4$ | Yes | No | 16.8 | 1.60 | 1.34 | 0.74 |
| 2 | 0.50% $NaBH_4$ | Yes | No | 3.7 | 1.60 | 1.38 | 0.76 |
| 3 | 1.00% $NaBH_4$ | Yes | No | 2.2 | 1.59 | 1.37 | 0.74 |
| B | none | Yes | Yes | 25.9 | 1.72 | 1.37 | 0.62 |
| 4 | 0.25% $NaBH_4$ | Yes | Yes | 9.0 | 1.62 | 1.43 | 0.80 |
| 5 | 0.50% $NaBH_4$ | Yes | Yes | 3.4 | 1.61 | 1.42 | 0.79 |
| 6 | 1.00% $NaBH_4$ | Yes | Yes | 2.2 | 1.61 | 1.45 | 0.77 |
| C | none | No | No | 91.0 | 1.84 | 0.84 | 0.10 |
| D | none | No | Yes | 60.5 | 1.84 | 1.10 | 0.20 |

\* AgO pellets were dipped in a mild reducing agent (10% methanol in 30% KOH at 80°C for 5 minutes) as described in U.S. Patent No. 4,015,056.

\*\* Consolidated pellets of AgO were dipped in a strong reducing agent (1% solution of hydrazine in methanol at 21°C for 5 minutes) as described in U.S. Patent No. 4,015,056 and No. 4,009,056.

## Example 2

Similar tests were performed on batches of cells made as in Example 1 except that AgO pellets were dipped in 1% methanol solution instead of 10% methanol solution while the consolidations were treated with hydrazine. In the cells of batches 7 and 8 according to the invention the electrolyte contained 1% by weight of sodium borohydride, while in those of batches E and F the electrolyte contained no reducing agent. The test results are set forth in Table II, the electrical measurements being taken three days after cell closure and coulometric measurements being made 48 hours after cell closure.

### TABLE II

| Batch No. | Consolidation Pretreatment | Impedance (ohms) | OCV (V) | CCV (V) | Flash Current (amperes) | Pellet Capacity (MAH) | % Reduction in Pellet Capacity |
|---|---|---|---|---|---|---|---|
| E | No | 27.3 | 1.74 | 1.00 | 0.47 | 385.3 | -- |
| F | Yes | 29.6 | 1.71 | 1.38 | 0.68 | 356.7 | 7.4 |
| 7 | Yes | 2.1 | 1.61 | 1.46 | 0.74 | 354.3 | 8.1 |
| 8 | No | 2.3 | 1.59 | 1.36 | 0.70 | 375.9 | 2.4 |

The results in Table II show that 1% by weight of sodium borohydride in the electrolyte included in a button cell prior to closure can provide cell electrical characteristics in a nominal Zn/AgO cell equivalent to those provided by consolidation pretreatment at a lesser sacrifice of cathode pellet coulometric capacity. Thus the cells of Batch 8 showed only 2.4% reduction in coulometric capacity of the cathode while the high OCV of 1.74 volts of Batch E was decreased and with a substantial increase in the CCV and flash current.

## Example 3

The results set forth in Table III, which were obtained after 3 months storage of further batches of cells made as in the previous examples, show that the inclusion of borohydride in the electrolyte is effective for extended periods of storage in lowering impedance and OCV and raising CCV and flash current. Batch 9 according to the invention contained 2.5% $NaBH_4$ in the electrolyte, while Batches G and H had no addition.

TABLE III

| Batch No. | Pretreatment of Cathode Pellet | Impedance (ohms) | OCV (V) | CCV (V) | Flash Current (amps) |
|---|---|---|---|---|---|
| G | methanol – 1 minute | 21.9 | 1.77 | 1.02 | 0.22 |
| H | methanol – 10 minutes | 27.6 | 1.67 | 0.81 | 0.23 |
| 9 | methanol – 10 minutes | 2.9 | 1.60 | 1.46 | 0.57 |

## Example 4

Further batches of sealed RW 44 button cells were similarly made in which from 1 to 12% by weight of sodium borohydride (solid or in 40% NaOH solution) was added to a 40% KOH, 1% ZnO aqueous electrolyte in cells having a 50-50 mix $AgO-Ag_2O$ cathode. Electrical tests showed that the coulometric capacity of the cells was not drastically reduced from its initial value by storage of 12 weeks at 45°C and 50% relative humidity. Capacity measured on discharge through 300 ohms (16 hours per day) showed a retention of from about 84% to 98% of initial capacity. Discharge through 625 ohms (16 hours per day) showed a retention of from about 89% to 96% of initial capacity.

## Example 5

Further batches of sealed RW 44 button cells with 50% $AgO-Ag_2O$ cathodes were similarly made with additions of sodium, potassium and rubidium borohydrides to a 40% KOH, 1% ZnO aqueous electrolyte. Cell impedance, OCV and flash current were measured three days after making the cells, and later after 90 days of storage at room temperature (RT). The results of these tests are set forth in Table IV. Batches 10-18 were in accordance with the invention, but batch I was not.

The results in Table IV show that $KBH_4$ inclusion in the electrolyte is clearly effective in reducing cell impedance and raising flash current while controlling cell voltage at the $Zn/Ag_2O$ couple level. Rubidium borohydride, however is more effective at the higher concentration level of 2.0% (equivalent to about 0.75% of sodium borohydride).

TABLE IV

| Batch | Electrolyte additive | After 3 days RT | | | After 90 days RT | | |
|---|---|---|---|---|---|---|---|
| | | Impedance (ohms) | OCV (V) | Flash Current (Amperes) | Impedance (ohms) | OCV (V) | Flash Current (Amperes) |
| I | no additive | 26.4 | 1.83 | 0.28 | 18.7 | 1.80 | 0.27 |
| 10 | 0.5% $NaBH_4$ | 2.0 | 1.59 | 0.80 | 2.4 | 1.59 | 0.63 |
| 11 | 1.0% $NaBH_4$ | 2.1 | 1.59 | 0.72 | 2.5 | 1.58 | 0.59 |
| 12 | 2.0% $NaBH_4$ | 3.4 | 1.59 | 0.48 | 4.3 | 1.59 | 0.42 |
| 13 | 0.5% $KBH_4$ | 2.5 | 1.59 | 0.78 | 2.3 | 1.59 | 0.67 |
| 14 | 1.0% $KBH_4$ | 2.3 | 1.59 | 0.71 | 2.5 | 1.59 | 0.61 |
| 15 | 2.0% $KBH_4$ | 2.2 | 1.59 | 0.71 | 2.3 | 1.59 | 0.63 |
| 16 | 0.5% $RbBH_4$ | 24.7 | 1.80 | 0.64 | 17.6 | 1.77 | 0.30 |
| 17 | 1.0% $RbBH_4$ | 16.0 | 1.64 | 0.57 | 19.7 | 1.74 | 0.31 |
| 18 | 2.0% $RbBH_4$ | 3.9 | 1.62 | 0.49 | 3.4 | 1.61 | 0.55 |

## Example 6

The results of comparative tests on batches L-S of sealed RW 44 Zn/AgO button cells with a 40% KOH, 1% ZnO aqueous electrolyte to which various mild reducing agents were added and Batch 19 according to the invention with an addition of 0.5% $NaBH_4$ are set forth in Table V. The reducing agents were added in amounts capable of removing the same amount of capacity from the cathode as 0.5% $NaBH_4$. The cathode pellets were essentially pure AgO treated with 10% methanol in 30% KOH for 5 minutes at 80°C.

### TABLE V

| Batch | Electrolyte additive | Impedance (ohms) | OCV* (V) | CCV (V) | Flash Current (Amperes) |
|-------|---------------------|------------------|----------|---------|------------------------|
| J | none | 55.8 | 1.81 | 1.40 | 0.58 |
| 19 | 0.5% $NaBH_4$ | 4.4 | 1.62 | 1.41 | 0.57 |
| L | 3.2% acetic acid | 53.3 | 1.81 | 1.34 | 0.48 |
| M | 2.5% formic acid | 50.0 | 1.81 | 1.37 | 0.58 |
| N | 1.9% tartaric acid | 44.2 | 1.70 | 1.39 | 0.54 |
| O | 11.2% citric acid | 66.0 | 1.80 | 1.39 | 0.52 |
| P | 2.3% ascorbic acid | 43.3 | 1.72 | 1.41 | 0.62 |
| Q | 10.0% methanol | 40.0 | 1.76 | 1.40 | 0.53 |
| R | 1.0% formaldahyde | 36.0 | 1.74 | 1.40 | 0.52 |
| S | 2.0% dextrose | 79.0 | 1.81 | 1.32 | 0.36 |

* measured across 30 ohm resistor.

The mild reducing agents are clearly much less effective than sodium borohydride in reducing cell impedance and maintaining the cell voltage at the $Zn/Ag_2O$ couple level.

## Example 7

This is an example of a different type of cell according to the invention.

RW 54 type cells were made containing a zinc anode, a mercuric oxide cathode extended with $\beta - MnO_2$, and a 30% KOH - 1% ZnO aqueous electrolyte with and without additions of sodium and potassium borohydrides. The electrical characteristics of the cells were measured immediately after cell closure and after 4 weeks storage at 54°C and 50% relative humidity. Values not in brackets represent average values and the values in brackets represent the range of the property measured on batches of 40 cells. The results, set forth in Table VI, show that cells in accordance with the invention (Batches 19 and 20) immediately achieved OCV's characteristic of the Zn/HgO couple. After 4 weeks' storage, the cells of the invention exhibited an advantageously low impedance and high flash current.

TABLE VI

| Item | Batch T | Batch 19 | Batch 20 |
|---|---|---|---|
| A. Cell Electrolyte | 30% NaOH + 1% ZnO | 30% NaOH + 1% ZnO + 1% $NaBH_4$ | 30% NaOH + 1% ZnO + 1% $KBH_4$ |
| **B. Initial Cell Characteristics** | | | |
| Impedance (ohms) | 44.9 (16.5-58.9) | 42.9 (34.6-55.9) | 54.8 (38.9-71.1) |
| OCV (volts) | 1.465 (1.43-1.51) | 1.37 (1.36-1.38) | 1.36 (1.36-1.37) |
| CCV (volts) | 1.450 (1.43-1.49) | 1.36 (1.35-1.39) | 1.35 (1.34-1.35) |
| Flash Current (amperes) | 0.033 (0.03-0.08) | 0.026 (0.02-0.03) | 0.018 (0.01-0.03) |
| **C. Initial Cell Capacity (mAH) on 1500 Ohms Cont., RT** | | | |
| to 1.20V | 124.2 | 121.5 | 117.2 |
| to 0.90V | 152.3 | 150.5 | 152.5 |
| **D. Cell Characteristics After 4 weeks of 54°C-50%** | | | |
| Impedance (ohms) | 14.3 (6.4-21.6) | 6.5 (5.0-8.7) | 6.2 (5.1-7.3) |
| OCV (volts) | 1.42 (1.41-1.43) | 1.39 (1.38-1.40) | 1.38 (1.37-1.38) |
| CCV (volts) | 1.41 (1.38-1.41) | 1.39 (1.38-1.40) | 1.37 (1.36-1.37) |
| Flash Current (amperes) | 0.12 (0.05-0.22) | 0.21 (0.15-0.26) | 0.21 (0.17-0.25) |

## Claims

1.      An electrochemical cell comprising an active metal anode, an aqueous alkaline electrolyte, a suitable separator and a cathode containing at least one reducible oxidic species dischargeable over the useful life of the cathode against the active metal anode at both a high voltage and a lower voltage, characterised in that an electrolyte-soluble reducing agent selected from the group of alkali metal borohydrides, quaternary ammonium borohydrides, complex aluminium hydrides and hydrazine is present in the cell and available to the electrolyte at the time of cell closure, in an amount effective to reduce at least part of the oxidic species.

2.      An electrochemical cell according to claim 1, in which the reducing agent is dissolved in the electrolyte at the time of cell closure.

3.      An electrochemical cell according to claim 1 or claim 2, in which the reducing agent is present in an amount sufficient to reduce from 0.1% to 10% of the reducible oxide species.

4.      An electrochemical cell according to any preceding claim in which the cathode consists of or contains divalent silver oxide and the reducing agent is an alkali metal borohydride.

5.      An electrochemical cell according to claim 4 in which the cathode consists of substantially pure divalent silver oxide or a mixture of AgO and $Ag_2O$ containing from 5 to 98.5% by weight of AgO.

6.      An electrochemical cell according to any one of claims 1 to 3 in which the cathode is a mixture of permanganate and $Ag_2O$ containing from 5 to 95% by weight of $Ag_2O$ or a mixture of manganese oxide and $Ag_2O$ containing from 10 to 95% by weight of $MnO_2$.

7.      An electrochemical cell according to any one of claims 1 to 3 in which the cathode contains mercuric

0077614

oxide and, as a reducible oxidic species, $\beta$ -manganese dioxide.

8.    An electrochemical cell according to any preceding claim in which the active metal of the anode is zinc.

9.    A button cell according to any preceding claim.

10.    A method of making an electrochemical cell comprising an active metal anode, an aqueous alkaline electrolyte, a suitable separator and a cathode containing at least one reducible oxidic species dischargeable over the useful life of the cathode against the active metal anode at both a high voltage and a lower voltage, characterised in that an electrolyte-soluble reducing agent selected from the group of alkali metal borohydrides, quaternary ammonium borohydrides, complex aluminium hydrides and hydrazine is incorporated in the electrolyte in an amount effective to reduce at least part of the oxidic species.